# FASCICULE DE BREVET EUROPEEN

(11) **EP 0 595 670 B1**
(45) Date de publication et mention de la délivrance du brevet: **06.12.1995**
(21) Numéro de dépôt: 93402392.0
(22) Date de dépôt: 30.09.1993
(51) Int. Cl.: B60T 13/14

(54) **Dispositif hydraulique d'actionnement pour installation de freinage d'un véhicule automobile comportant deux circuits hydrauliques de freinage**
Hydraulische Befehlseinrichtung für Bremssysteme von Kraftfahrzeugen mit zwei hydraulischen Bremskreisen
Hydraulic command device for brake system of a vehicle with two hydraulic brake circuits

(30) Priorité: 26.10.1992 FR 9212747
(43) Date de publication de la demande: 04.05.1994
(73) Titulaire: AUTOMOBILES PEUGEOT, 75116 Paris (FR); AUTOMOBILES CITROEN, 92200 Neuilly-sur-Seine (FR)
(72) Inventeur: Perrin, Claude, F-78650 Beynes (FR)
(74) Mandataire: Polus, Camille

(56) Documents cités:
- EP-A- 0 192 346
- DE-B- 2 450 874
- FR-A- 2 480 690
- GB-A- 2 074 274

## Description

La présente invention concerne un dispositif hydraulique d'actionnement pour une installation de freinage d'un véhicule automobile comportant deux circuits hydrauliques de freinage, muni de moyens d'amplification hydraulique de l'effort de freinage.

De façon classique, la sécurité du freinage est accrue par l'utilisation de deux circuits de freinage totalement indépendants alimentés par une commande unique (pédale de frein).

On connaît déjà dans l'état de la technique, notamment de FR-2 303 691, un dispositif hydraulique d'actionnement pour une installation de freinage à deux circuits hydrauliques indépendants, du type comportant un corps comprenant un piston, actionné par une pédale de frein, monté coulissant dans un premier alésage ménagé dans le corps, un tiroir de régulation de pression monté coulissant dans un second alésage ménagé dans le corps coaxialement au premier alésage, les alésages ayant leurs extrémités rapprochées en communication, le piston et le tiroir délimitant, d'une part, entre leurs extrémités rapprochées, une chambre centrale de pression communiquant avec un premier circuit de freinage, et d'autre part, à leurs extrémités opposées, deux chambres d'extrémité communiquant entre elles et avec le second circuit de freinage, le tiroir étant déplaçable entre une position de repos vers laquelle il est rappelé élastiquement et dans laquelle il met en communication les chambres d'extrémité avec un réservoir de liquide à pression normale, et une position de régulation dans laquelle il met en communication les chambres d'extrémité et le second circuit de freinage avec une source de liquide haute pression supérieure à la pression normale.

Dans ce type de dispositif, le déplacement du piston sous l'action de la pédale de frein provoque d'abord une montée en pression dans le premier circuit de freinage et ensuite, lorsque la pression est suffisante, un déplacement du tiroir provoquant une montée en pression dans le second circuit. Par conséquent, lorsque la pédale de frein est actionnée par le conducteur, la montée en pression dans les deux circuits de freinage n'est pas simultanée.

L'invention a pour but de fournir un dispositif de freinage à deux circuits de freinage dans lequel la montée en pression dans les deux circuits de freinage se fasse simultanément lorsque la pédale de frein est actionnée par le conducteur, ce dispositif étant par ailleurs plus simple à fabriquer que ceux connus dans l'état de la technique.

A cet effet l'invention a pour objet un dispositif hydraulique d'actionnement pour une installation de freinage d'un véhicule automobile du type précité caractérisé en ce que le tiroir de régulation de pression comporte des moyens de mise en communication d'un réservoir de liquide à pression normale avec la chambre centrale, en position de repos du tiroir.

Suivant d'autres caractéristiques de cette invention:
- les moyens de communication comprennent un trou sensiblement axial ménagé dans le tiroir, débouchant dans la chambre centrale, relié par au moins un perçage sensiblement radial ménagé dans le tiroir à une gorge annulaire ménagée dans la surface périphérique du tiroir et destinée à être mise en communication avec un conduit relié au réservoir de liquide à pression normale, en position de repos du tiroir
- le piston comporte des moyens élastiques de poussée destinés à solliciter le tiroir à l'encontre des moyens de rappel de ce tiroir en position de repos ;
- les moyens élastiques de poussée comprennent un ressort précontraint, de tarage supérieur au tarage d'un ressort des moyens de rappel du tiroir en position de repos ;
- le ressort précontraint est disposé entre deux sièges, le premier siège étant solidaire du piston, le second siège étant monté coulissant sur un support formant tige solidaire du piston, l'extrémité libre de la tige comportant une collerette destinée à coopérer par butée avec le siège coulissant pour maintenir le ressort en précompression, le siège coulissant coopérant avec un épaulement ménagé dans la surface périphérique externe du tiroir, ou bien, le ressort précontraint est disposé entre deux sièges, le premier siège étant solidaire du piston et formé à une extrémité d'un support tubulaire, le second siège étant monté coulissant sur ce support tubulaire, l'extrémité libre du support comportant un embout formant butée destiné à coopérer avec le siège coulissant pour maintenir le ressort en précompression, le siège coulissant coopérant avec un épaulement ménagé dans la surface du tiroir délimitant le trou sensiblement axial ;
- le trou sensiblement axial du tiroir forme logement pour le support de ressort précontraint, lorsque le tiroir et le piston se déplacent l'un par rapport à l'autre au cours d'une opération de freinage ;
- les deux alésages coaxiaux ont des diamètres sensiblement identiques.

Des exemples de réalisation de l'invention seront décrits ci-dessous en regard des figures annexées dans lesquelles :
- la figure 1 est une vue en coupe longitudinale d'un dispositif selon l'invention, montrant le piston et le tiroir selon un premier mode de réalisation;
- la figure 2 est une vue de détail de la figure 1, montrant le piston et le tiroir selon un second mode de réalisation.

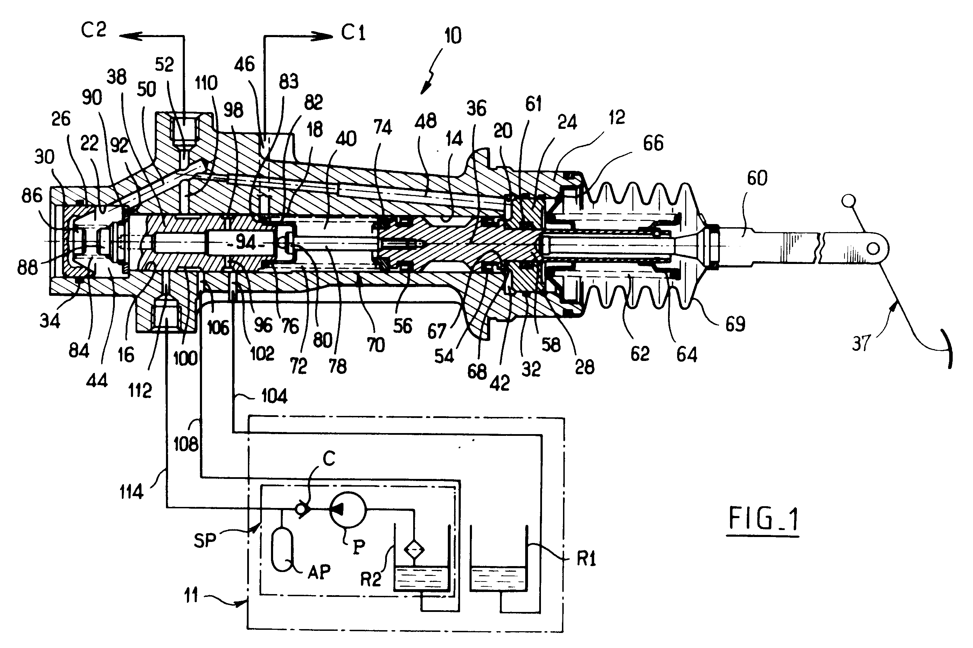

Le dispositif hydraulique d'actionnement selon l'invention représenté à la figure 1, désigné par la référence générale 10, est destiné à être incorporé dans une installation de freinage d'un véhicule automobile comportant deux circuits de freinage C1,C2. Ce dispositif est muni de moyens d'amplification hydraulique de l'effort de freinage. Il sera appelé par la suite "servofrein".

On a également représenté à la figure 1 une centrale hydraulique de type connu, désignée par la référence générale 11, raccordée à l'installation de freinage.

Cette centrale hydraulique 11 comprend deux réservoirs R1,R2 de liquide de frein à une pression normale, par exemple à la pression atmosphérique, raccordés respectivement aux circuits de freinage C1,C2 par des moyens classiques qui seront décrits ultérieurement.

Le liquide de frein est de type connu et comprend par exemple de l'huile minérale.

La centrale hydraulique 11 comporte également une source SP de liquide de frein haute pression, supérieure à la pression normale du liquide, comprenant le réservoir R2, une pompe P, un clapet anti-retour C et un accumulateur de pression AP.

La source SP de liquide haute pression est raccordée par des moyens connus, qui seront décrits ultérieurement, au servofrein 10.

Le servofrein 10 comporte un corps 12 dans lequel sont ménagés axialement deux alésages 14,16 coaxiaux, de diamètres sensiblement identiques, ayant leurs extrémités rapprochées en communication. Ces extrémités rapprochées sont reliées entre elles par un évidement 18 annulaire ménagé dans le corps 12.

Les extrémités opposées entre elles des alésages 14,16 débouchent respectivement dans des perçages cylindriques 20,22 ménagés dans le corps 12 coaxialement aux alésages 14,16. Ces perçages 20,22 sont obturés à leurs extrémités opposées aux alésages 14,16 par des bouchons 24,26 bloqués de façon connue sur le corps 12, par exemple au moyen de joncs annulaires 28,30.

L'étanchéité entre les bouchons 24,26 et la surface interne des perçages 20,22 est obtenue de façon classique au moyen de joints toriques 32,34 disposés entre ces éléments.

Un piston 36, actionné par une pédale de frein 37, est monté coulissant dans le premier alésage 14. Par ailleurs, un tiroir 38 de régulation de pression est monté coulissant dans le second alésage 16.

Les extrémités rapprochées du piston 36 et du tiroir 38 délimitent, à la jonction des alésages 14,16, une chambre centrale de pression 40. L'extrémité du piston 36 en regard du perçage 20 délimite une première chambre d'extrémité 42 et l'extrémité du tiroir 38 en regard du perçage 22 délimite une seconde chambre d'extrémité 44.

La chambre centrale 40 et les deux chambres d'extrémité 42,44 contiennent du liquide de frein provenant des réservoirs R1,R2.

La chambre centrale 40 est reliée par l'intermédiaire d'un conduit 46 ménagé dans le corps 12 à un premier circuit de freinage C1. Le conduit 46 débouche dans l'évidement 18 disposé dans le corps 12 de manière à être en communication avec la chambre 40 indépendamment des positions du piston 36 et du tiroir 38.

Les chambres d'extrémité 42,44 sont raccordées entre elles et au second circuit de freinage C2 par trois conduits 48-52, ménagés dans le corps 12, communiquant entre eux.

On décrira maintenant le piston 36 et le tiroir 38 de régulation de pression plus en détail suivant un premier mode de réalisation.

Ce piston 36 comporte deux coupelles d'étanchéité 54,56 de type connu, disposées à ses extrémités et fixées sur le piston par des moyens connus.

L'extrémité du piston 36 en regard de la chambre d'extrémité 42 (à droite en considérant la figure 1) est prolongée par une tige 58, traversant le bouchon 24, de liaison avec une tringle de poussée 60 reliée par des moyens connus à la pédale de frein 37.

La tige 58 et la tringle 60 sont reliées entre elles par emboîtement de leurs extrémités de liaison.

L'étanchéité entre le bouchon 24 et la tige 58 de raccordement est assurée de façon classique par un joint torique 61 disposé entre ces éléments.

L'extrémité libre de la tige 58 porte un ressort 62 de rappel du piston 36 en position de repos. Le ressort 62 est monté entre deux coupelles 64, 66 formant sièges, la première étant solidaire de la tige 58 et la seconde étant solidaire du corps 12.

Le piston 36 comporte également une collerette de positionnement 67 destinée à coopérer par butée avec une saillie complémentaire 68 du bouchon 24 pour maintenir le piston 36 en position de repos.

Un soufflet de protection 69 dont les extrémités sont fixées respectivement sur le corps 12 et la tringle de poussée 60, recouvre le ressort 62 de rappel et ses moyens de support.

L'extrémité du piston 36 en regard de la chambre centrale 40 (à gauche en considérant la figure 1) comporte des moyens élastiques 70 de poussée du tiroir 38. Ces moyens comprennent un ressort 72 précontraint monté entre deux coupelles 74,76 formant sièges, la première étant solidaire du piston 36 et la seconde étant montée coulissante sur une tige support 78 fixée par une extrémité sur le piston 36, coaxialement à ce dernier. L'extrémité libre de la tige 78 est munie d'une collerette 80 formant butée de retenue de la coupelle coulissante 76 de manière à maintenir le ressort 72 en précompression.

La coupelle coulissante 76 est munie d'ouvertures 82 de passage de liquide de frein.

Le bord périphérique de la coupelle 76 est destiné à coopérer avec un épaulement 83 de forme complémentaire ménagé dans la surface périphérique externe de l'extrémité correspondante du tiroir 38.

Le tiroir 38 est sollicité élastiquement en position de repos par un ressort de rappel 84 maintenu en compression entre deux parties formant siège 86,88 solidaires respectivement du bouchon 26 et de l'extrémité correspondante du tiroir 38.

Le tarage du ressort de rappel 84 est plus faible que celui du ressort de poussée 72.

Une rondelle 90 de positionnement du tiroir 38 en position de repos est fixée par des moyens connus sur l'extrémité du tiroir 38 en regard de la chambre 44 et est destinée à coopérer avec un épaulement 92 ménagé dans le corps 12 à la jonction de l'alésage 16 et du perçage 22.

Le tiroir 38 comporte un trou borgne 94, étagé, ménagé coaxialement au tiroir.

Le trou 94 communique par son extrémité ouverte avec la chambre centrale 40.

Les dimensions du trou 94 sont adaptées, d'une part pour qu'il puisse former un logement pour l'extrémité libre de la tige support 80 lorsque le piston 36 et le tiroir 38 se déplacent l'un par rapport à l'autre, et d'autre part pour alléger le tiroir 38.

Le trou 94 est relié par au moins un perçage 96 ménagé radialement dans le tiroir 38 à une première gorge annulaire 98 ménagée dans la surface périphérique du tiroir 38.

Le tiroir 38 comporte également une seconde gorge annulaire 100, de plus grande largeur que la gorge 96, ménagée sur sa surface périphérique.

La gorge 100 a une largeur adaptée pour que, indépendamment de la position du tiroir 38, elle communique avec un conduit 110, ménagé dans le corps 12, raccordé aux chambres d'extrémité 42,44 et au second circuit de freinage C2 par l'intermédiaire des conduits 48-52.

En position de repos du tiroir 38, telle que représentée à la figure 1, la première gorge annulaire 98 communique avec un conduit 102 raccordé par des moyens connus 104 au réservoir R1, et la seconde gorge annulaire 100 communique avec un conduit 106 ménagé dans le corps 12 et raccordé par des moyens connus 108 au réservoir R2.

Lorsque le tiroir 38 est déplacé axialement en position active de freinage, vers la gauche en considérant la figure 1, la première gorge 98 est isolée du conduit 102 de raccordement au réservoir R1, et la seconde gorge 100 est, d'une part, isolée du conduit de raccordement 106 au réservoir R2, et d'autre part mise en communication avec un conduit 112, ménagé dans le corps 12, raccordé par des moyens connus 114 à la source SP de liquide haute pression.

On décrira ci-dessous le fonctionnement du servofrein 10.

Au cours du freinage, le conducteur actionne la pédale de frein 37 et déplace axialement vers la chambre centrale 40 le piston 36, par l'intermédiaire de la tringle de poussée 60.

Dans un premier temps, le tarage du ressort 72 précontraint porté par le piston 36 étant supérieur au tarage du ressort 84 de rappel du tiroir 38, les moyens 70 de poussée sollicitent le tiroir 38 à l'encontre de la force de rappel du ressort 84 et déplace celui-ci axialement vers la gauche en considérant la figure 1.

Le déplacement du tiroir 38 provoque tout d'abord la fermeture simultanée des conduits 102,106 de raccordement aux réservoirs R1,R2 puis la mise en communication de la seconde gorge 100 avec le conduit 112 de raccordement à la source SP de liquide haute pression.

Le réservoir R1 étant isolé de la chambre centrale 40, la pression du liquide contenu dans cette chambre et dans le premier circuit de freinage C1 augmente.

En position active de freinage, le tiroir 38 permet, d'une part d'alimenter en pression le second circuit de freinage, et d'autre part d'assister l'effort de freinage du conducteur.

En effet, la seconde gorge 100 étant alimentée en liquide haute pression, la pression du liquide contenu dans le second circuit de freinage C2, communiquant avec la gorge 100, augmente.

Par ailleurs, la pression du liquide dans le second circuit de freinage C2 est également celle du liquide contenu dans les chambres d'extrémités 42 et 44 communiquant avec le circuit C2. La pression du liquide de la chambre 42 agit sur le piston 36, dans le sens du freinage, de manière à amplifier l'effort fourni par le conducteur sur la pédale de frein.

La largeur et la position des deux gorges périphériques 98,100 du tiroir 38 sont adaptées pour que, d'une part la course du tiroir permettant d'isoler les conduits 102 et 106, et d'autre part la course du tiroir permettant de mettre en communication la seconde gorge 100 avec le conduit 112, soient très faibles. De cette façon, après un très faible déplacement du tiroir, ce dernier est en équilibre sous l'action de forces qui se compensent. Ces forces sont d'une part, du côté de la chambre 44, la force due à la pression du liquide du second circuit de freinage C2 et la force de rappel du ressort 84, et d'autre part, du côté de la chambre 40, la force due à la pression du liquide du premier circuit de freinage C1 et la force de poussée du ressort 72.

On notera donc que les pressions hydrauliques des deux circuits de freinage C1,C2 sont identiques à la différence de tarage près des deux ressorts 72,84.

De préférence, la différence de tarage des deux ressorts 72,84 est telle que la différence de pression de part et d'autre du tiroir 38 n'excède pas 2 bar en cours de freinage intense.

Au cours du freinage, le déplacement du piston 36 est proportionnel à la consommation en liquide du premier circuit de freinage C1, c'est-à-dire proportionnel au déplacement de liquide dû à la course des pistons montés de façon classique dans les organes de freinage disposés au voisinage des roues du véhicule et alimentés par ce circuit.

On notera que pendant toute l'opération de freinage le ressort 62 de rappel du piston 36 est comprimé.

Lorsque le conducteur cesse de freiner et relâche la pédale de frein 37, le piston 36 est sollicité vers sa position de repos par le ressort 62, la pression du liquide contenu dans la chambre centrale 40 diminue et le tiroir 38 est également sollicité vers sa position de repos.

Le déplacement du tiroir 38 en sens inverse de celui décrit lors de l'opération de freinage provoque la fermeture du conduit 112 de raccordement à la source de liquide haute pression, les ouvertures simultanées des conduits 102,106 de raccordement aux réservoirs R1,R2 et par conséquent la chute des pressions hydrauliques dans les deux circuits de freinage C1,C2.

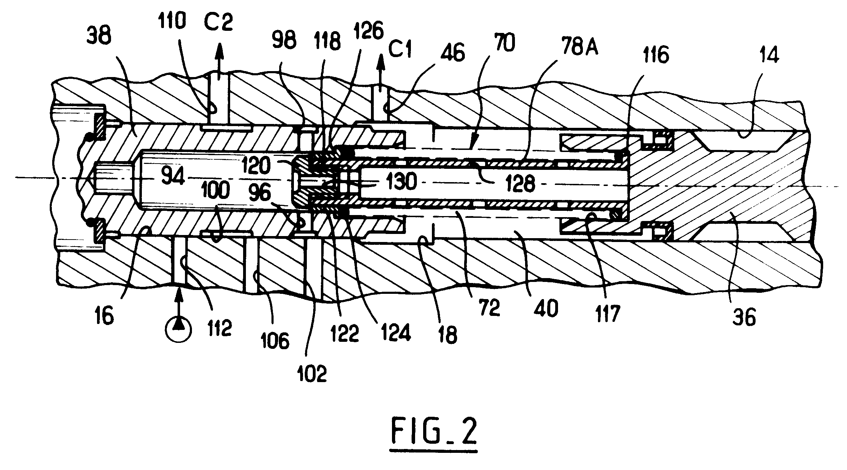

On décrira maintenant un piston 36 et un tiroir 38 de régulation de pression suivant un autre mode de réalisation, en regard de la figure 2.

Sur cette figure les éléments analogues à ceux de la figure 1 sont désignés par des références identiques.

Dans ce cas, les moyens élastiques de poussée 70 comprennent un ressort 72 porté par un support 78A formant tube, maintenu par une de ses extrémités sur le piston 36, coaxialement à ce dernier.

L'extrémité de fixation du support 78A comporte une collerette 116 et est engagée jusqu'au fond d'un évidement axial 117 ménagé dans l'extrémité du piston 36 en regard de la chambre centrale 40.

Un embout 118 est vissé sur l'extrémité libre du support 78A. Cet embout 118 comporte une tête circulaire 120 d'un diamètre supérieur au diamètre externe du support 78A de manière à former un épaulement d'extrémité du support 78A.

Le ressort 72 est précontraint entre deux sièges, le premier étant formé par la collerette 116 du support 78A et le second étant formé par une douille 122, munie à une de ses extrémités d'une collerette 124 destinée à coopérer avec le ressort, montée coulissante sur le support 78A.

La collerette 124 est par ailleurs destinée à coopérer avec un épaulement 126 ménagé dans la surface interne du trou axial 94 du tiroir 38.

La course de la douille 122 est limitée à l'extrémité libre du support 78A par l'épaulement formé par la tête 120 de l'embout 118.

Le support 78A et l'embout 118 comportent des perçages 128,130 permettant le passage de l'huile de frein entre le trou 94 et la chambre centrale 40.

Comme dans le premier mode de réalisation, le trou 94 du tiroir 38 forme un logement pour le support 78A des moyens de poussée 70.

Le fonctionnement du piston 36 et du tiroir 38 est analogue au fonctionnement décrit ci-dessus pour le premier mode de réalisation.

L'invention ne se limite pas aux modes de réalisation décrits.

En particulier, les deux réservoirs de la centrale hydraulique peuvent être remplacés par un réservoir unique.

L'invention comporte de nombreux avantages.

Elle permet de commander deux circuits de freinage complètement indépendants, avec une course de pédale relativement faible correspondant au déplacement de liquide dans un seul de ces deux circuits.

Le tiroir de régulation de pression permet d'isoler simultanément les conduits de raccordement aux réservoirs des circuits de freinage et par conséquent d'obtenir une montée en pression simultanée dans les deux circuits de freinage lors de l'actionnement de la pédale de frein.

Le servofrein est facile à fabriquer étant donné que les alésages dans lesquels coulissent le piston et le tiroir de régulation de pression sont coaxiaux et de diamètres sensiblement identiques. Ces alésages peuvent être percés en une seule opération d'usinage. Cependant les opérations de finition peuvent être effectuées différemment selon que l'alésage est destiné à recevoir le piston ou bien le tiroir de régulation de pression.

## Revendications

1. Dispositif hydraulique d'actionnement pour une installation de freinage d'un véhicule automobile comportant deux circuits hydrauliques de freinage (C1,C2), muni de moyens d'amplification hydraulique de l'effort de freinage, du type comportant un corps comprenant un piston (36), actionné par une pédale de frein (37), monté coulissant dans un premier alésage (14) ménagé dans le corps (12), un tiroir (38) de régulation de pression monté coulissant dans un second alésage (16) ménagé dans le corps (12) coaxialement au premier alésage (14), les alésages (14,16) ayant leurs extrémités rapprochées en communication, le piston (36) et le tiroir (38) délimitant, d'une part, entre leurs extrémités rapprochées, une chambre centrale de pression (40) communiquant avec un premier circuit de freinage (C1), et d'autre part, à leurs extrémités opposées, deux chambres d'extrémité (42,44) communiquant entre elles et avec le second circuit de freinage (C2), le tiroir (38) étant déplaçable entre une position de repos vers laquelle il est rappelé élastiquement et dans laquelle il met en communication les chambres d'extrémité (42,44) avec un réservoir (R2) de liquide à pression normale, et une position de régulation dans laquelle il met en communication les chambres d'extrémité (42,44) et le second circuit de freinage (C2) avec une source (SP) de liquide haute pression supérieure à la pression normale, caractérisé en ce que le tiroir (38) de régulation de pression comporte des moyens (94-98) de mise en communication d'un réservoir (R1) de liquide à pression normale avec la chambre centrale (40), en position de repos du tiroir (38).

2. Dispositif selon la revendication 1, caractérisé en ce que les moyens de communication comprennent un trou (94) sensiblement axial ménagé dans le tiroir (38), débouchant dans la chambre centrale (40), relié par au moins un perçage (96) sensiblement radial ménagé dans le tiroir (38) à une gorge annulaire (98) ménagée dans la surface périphérique du tiroir (38) et destinée à être mise en communication avec un conduit (102) relié au réservoir (R1) de liquide à pression normale, en position de repos du tiroir (38).

3. Dispositif selon la revendication 1 ou 2, caractérisé en ce que le piston (36) comporte des moyens élastiques (70) de poussée destinés à solliciter le tiroir (38) à l'encontre des moyens (84) de rappel de ce tiroir (38) en position de repos.

4. Dispositif selon la revendication 3, caractérisé en ce que les moyens élastiques (70) de poussée comprennent un ressort (72) précontraint, de tarage supérieur au tarage d'un ressort (84) des moyens de rappel du tiroir (38) en position de repos.

5. Dispositif selon la revendication 4, caractérisé en ce que le ressort (72) précontraint est disposé entre deux sièges (74,76), le premier siège (74) étant solidaire du piston (36), le second siège (76) étant monté coulissant sur un support formant tige (78) solidaire du piston (36), l'extrémité libre de la tige (78) comportant une collerette (80) destinée à coopérer par butée avec le siège coulissant (76) pour maintenir le ressort en précompression, le siège coulissant (76) coopérant avec un épaulement (83) ménagé dans la surface périphérique externe du tiroir (38).

6. Dispositif selon la revendication 4, caractérisé en ce que le ressort précontraint (72) est disposé entre deux sièges (116,124), le premier siège étant solidaire du piston (36) et formé à une extrémité d'un support tubulaire (78A), le second siège (124) étant monté coulissant sur ce support tubulaire, l'extrémité libre du support (78A) comportant un embout (118) formant butée destiné à coopérer avec le siège coulissant (124) pour maintenir le ressort (72) en précompression, le siège coulissant (124) coopérant avec un épaulement (126) ménagé dans la surface du tiroir (38) délimitant le trou sensiblement axial (94).

7. Dispositif selon la revendication 5 ou 6, caractérisé en ce que le trou (94) sensiblement axial du tiroir (38) forme logement pour le support (78;78A) de ressort précontraint, lorsque le tiroir (38) et le piston (36) se déplacent l'un par rapport à l'autre au cours d'une opération de freinage.

8. Dispositif selon l'une quelconque des revendications 1 à 7, caractérisé en ce que les deux alésages coaxiaux (14,16) ont des diamètres sensiblement identiques.

## Claims

1. A hydraulic actuating device for a braking installation in a motor vehicle comprising two hydraulic braking networks (C1, C2), the device being fitted with means for hydraulic amplification of the braking force, of the type comprising a body with a piston (36) actuated by a brake pedal (37) and slidably mounted in a first bore (14) provided in the body (12), [and] a pressure-regulating slide valve (38) slidably mounted in a second bore (16) provided in the body (12) coaxially with the first bore (14), the adjacent ends of the bores (14, 16) communicating with one another, the piston (36) and the slide valve (38) firstly defining between their adjacent ends a central pressure chamber (40) communicating with a first braking network (C1) and secondly defining at their remote ends two end chambers (42, 44) which communicate with one another and with the second braking network (C2), the slide valve (38) being displaceable between an idle position towards which it is resiliently returned and in which it brings about communication of the end chambers (42, 44) with a reservoir (R2) of fluid at standard pressure, and a regulating position in which it brings about communication of the end chambers (42, 44) and the second braking network (C2) with a source (SP) of high-pressure fluid, the pressure thereof being greater than the standard pressure, **characterized in that** the pressure-regulating slide valve (38) comprises means (94 - 98) for bringing about communication of a reservoir (R1) of fluid at standard pressure with the central chamber (40) when the slide valve (38) is in its idle position.

2. A device according to claim 1, **characterised in that** the communication means comprise a substantially axial hole (94) provided in the slide valve (38) and opening into the central chamber (40) and connected, by at least one substantially radial bore (96) provided in the slide valve (38), to an annular throat (98) which is provided in the peripheral surface of the slide valve (38) and is intended to be brought into communication with a conduit (102) which is connected to the reservoir (R1) for fluid at standard pressure, when the slide valve (38) is in its idle position.

3. A device according to claim 1 or 2, **characterised in that** the piston (36) comprises resilient push means (70) intended to stress the slide valve (38) against the means (84) for returning the said slide valve (38) into its idle position.

4. A device according to claim 3, **characterised in that** the resilient push means (70) comprise a pre-stressed spring (72) of a rating greater than the rating of a spring (84) in the means for returning the slide valve (38) into its idle position.

5. A device according to claim 4, **characterised in that** the pre-stressed spring (72) is arranged between two seats (74, 76), the first seat (74) being rigid with the piston (36) and the second seat (76) being slidably mounted on a support forming a rod (78) which is rigid with the piston (36), the free end of the rod (78) comprising a flange (80) intended to co-operate by abutment with the sliding seat (76) in order to maintain the pre-stressing of the spring, the sliding seat (76) co-operating with a shoulder (83) provided in the peripheral outer surface of the slide valve (38).

6. A device according to claim 4, **characterised in that** the pre-stressed spring (72) is arranged between two seats (116, 124), the first seat being rigid with the piston (36) and formed at one end of a tubular support (78A), the second seat (124) being slidably mounted on the said tubular support, the free end of the support (78A) comprising an end piece (118) forming a stop device and intended to co-operate with the sliding seat (124) in order to maintain the pre-stressing of the spring (72), the sliding seat (124) co-operating with a shoulder (126) provided in the surface of the slide valve (38) delimiting the substantially axial hole (94).

7. A device according to claim 5 or 6, **characterised in that** the substantially axial hole (94) in the slide valve (38) forms a housing for the support (78; 78A) of the pre-stressed spring, whilst the slide valve (38) and the piston (36) are displaced relative to one another during a braking operation.

8. A device according to any one of claims 1 to 7, **characterised in that** the two coaxial bores (14, 16) are of substantially identical diameter.

## Patentansprüche

1. Hydraulische Befehlseinrichtung für ein Bremssystem eines Kraftfahrzeugs mit zwei hydraulischen Bremskreisen (C1, C2), die mit Mitteln zur hydraulischen Verstärkung der Bremskraft versehen ist, von der Art mit einem Körper, der einer Kolben (36) enthält, welcher mittels eines Bremspedals (37) betätigt wird und gleitend in einer ersten, in dem Körper (12) vorgesehenen Bohrung (14) montiert ist, sowie einen Schieber (38) zur Druckregelung, welcher gleitend in einer zweiten, in dem Körper (12) koaxial zur ersten Bohrung (14) vorgesehenen Bohrung (14) montiert ist, wobei die benachbarten Enden der Bohrungen (14, 16) miteinander in Verbindung stehen, wobei der Kolben (36) und der Schieber (38) einerseits zwischen ihren benachbarten Enden eine zentrale Druckkammer (40), die mit einem ersten Bremskreis (C1) verbunden ist, und andererseits an ihren entgegengesetzten Enden zwei Endkammern (42, 44) abgrenzen, die untereinander und mit dem zweiten Bremskreis (C2) verbunden sind, wobei der Schieber (38) zwischen einer Ruhestellung, in welche er elastisch rückgestellt wird und in welcher er die Endkammern (42, 44) mit einem Reservoir (R2) mit Flüssigkeit Von Normaldruck verbindet, und einer Regelungsstellung verschiebbar ist, in welcher er die Endkammern (42, 44) und den zweiten Bremskreis (C2) mit einer Quelle (SP) für Flüssigkeit von hohem Druck, der hoher ist als der Normaldruck, verbindet, dadurch gekennzeichnet, daß der Schieber (38) zur Druckregetung Mittel (94-98) aufweist, die in Ruhestellung des Schiebers (38) zur Verbindung eines Reservoirs (R1) mit Flüssigkeit von Normaldruck mit der zentralen Kammer (40) dienen.

2. Vorrichtung nach Anspruch 1, dadurch gekennzeichnet, daß die Verbindungsmittel ein in dem Schieber (38) vorgesehenes im wesentlichen axiales Loch (94) umfassen, das in die zentrale Kammer (40) einmündet und durch mindestens eine in dem Schieber (38) vorgesehene im wesentlichen radiale Bohrung (96) mit einer Ringnut (98) verbunden ist, die in der peripheren Oberfläche des Schiebers (38) vorgesehen ist und dazu bestimmt ist, in Ruhestellung des Schiebers (38) mit einer Leitung (102) in Verbindung zu stehen, die mit dem Reservoir (R1) mit Flüssigkeit von Normaldruck verbunden ist.

3. Vorrichtung nach Anspruch 1 oder 2, dadurch gekennzeichnet, daß der Kolben (36) elastische Schubmittel (70) aufweist, die dazu bestimmt sind, den Schieber (38) gegen die Mittel (84) zur Rückstellung dieses Schiebers (38) in die Ruhestellung zu belasten.

4. Vorrichtung nach Anspruch 3, dadurch gekennzeichnet, daß die elastischen Schubmittel (70) eine vorgespannte Feder (72) umfassen, deren Tarierung höher ist als die Tarierung einer Feder (84) der Mittel zur Rückstellung des Schiebers (38) in die Ruhestellung.

5. Vorrichtung nach Anspruch 4, dadurch gekennzeichnet, daß die vorgespannte Feder (72) zwischen zwei Sitzen (74, 76) angeordnet ist, wobei der erste Sitz (74) fest mit dem Kolben (36) verbunden ist und der zweite Sitz (76) gleitend auf einem Träger montiert ist, der eine mit dem Kolben (36) fest verbundene Stange (78) bildet, wobei das freie Ende der Stange (78) einen Kragen (80) aufweist, der dazu bestimmt ist, durch Anschlag mit dem gleitenden Sitz (76) zusammenzuwirken, um die Feder vorgepreßt zu halten, wobei der gleitende Sitz (76) mit einer Schulter (83) zugammenwirkt, die an der äußeren peripheren Oberfläche des Schiebers (38) vorgesehen ist.

6. Vorrichtung nach Anspruch 4, dadurch gekennzeichnet, daß die vorgespannte Feder (72) zwischen zwei Sitzen (126, 124) angeordnet ist, wobei der erste Sitz fest mit dem Kolben (36) verbunden ist und an einem Ende eines röhrenförmigen Trägers (78A) ausgebildet ist und der zweite Sitz (124) gleitend auf diesem röhrenförmigen Träger montiert ist, wobei das freie Ende des Trägers (78A) einen Ansatz (118) aufweist, der einen Anschlag bildet, dazu bestimmt, mit dem gleitenden Sitz (124) zusammenzuwirken, um die Feder (72) vorgepreßt zu halten, wobei der gleitende Sitz (124) mit einer Schulter (126) zusammenwirkt, die in der Oberfläche des Schiebers (38) vorgesehen ist, welche das im wesentlichen axiale Loch (94) umgrenzt.

7. Vorrichtung nach Anspruch 5 oder 6, dadurch gekennzeichnet, daß das im wesentlichen axiale Loch (94) des Schiebers (38) eine Aufnahme für den Träger (78; 78A) der vorgespannten Feder bildet, wenn der Schieber (38) und der Kolben (36) während eines Bremsvorgangs in bezug aufeinander verschoben werden.

8. Vorrichtung nach irgendeinem der Ansprüche 1 bis 7, dadurch gekennzeichnet, daß die beiden koaxialen Bohrungen (14, 16) im wesentlichen identische Durchmesser aufweisen.
